# EUROPEAN PATENT APPLICATION

(11) **EP 4 852 068 A1**
(43) Date of publication of application: **09.12.2026**
(21) Application number: 26182687.9
(22) Date of filing: 02.06.2026
(51) Int. Cl.: H01M 4/04

(54) **METHOD OF MANUFACTURING ELECTRODE FOR RECHARGEABLE LITHIUM BATTERY, ELECTRODE FOR RECHARGEABLE LITHIUM BATTERY, AND RECHARGEABLE LITHIUM BATTERY INCLUDING THE ELECTRODE**

(30) Priority: 05.06.2025 KR 20250073675
(71) Applicant: SAMSUNG SDI CO., LTD., Yongin-si, Gyeonggi-do 17084 (KR)
(72) Inventor: KWON, Il Kyong, 16678 Suwon-si (KR); KIM, Min Sic, 16678 Suwon-si (KR); YU, Hong Ryeol, 16678 Suwon-si (KR); LEE, Dong Geun, 16678 Suwon-si (KR); MOON, Jeung Gi, 16678 Suwon-si (KR)
(74) Representative: Maiwald GmbH

(57) **Abstract**

A method of manufacturing a dry electrode for a rechargeable lithium battery includes preparing granules including a first positive electrode active material and a first binder. A dry electrode film is formed from a mixture of the granules, a second positive electrode active material, and a second binder. The dry electrode film is laminated onto a current collector and the laminated dry electrode film is rolled. The granules have a D90 size of 100 µm or less, and the second positive electrode active material has a D50 average size D50 of 3 µm or less.

## Description

### BACKGROUND

### 1. Field of the Disclosure

The present disclosure relates to a method of manufacturing an electrode for a rechargeable lithium battery, an electrode for a rechargeable lithium battery, and a rechargeable lithium battery.

### 2. Discussion of Related Art

With the increasing number of electronic devices using batteries such as mobile phones, notebook computers, electric vehicles, and the like, the demand for secondary batteries having high energy density and high capacity is increasing. Thus, improved performance of rechargeable lithium batteries is highly desirable.

A rechargeable lithium battery typically includes a positive electrode and a negative electrode that contain an active material capable of the intercalation and deintercalation of lithium ions. A rechargeable battery produces electrical energy by oxidation and reduction reactions when the lithium ions are intercalated into and deintercalated from the positive electrode and the negative electrode.

Research has been conducted into making electrodes that include a dry electrode film which is formed without a solvent. A dry electrode film typically includes an electrode active material, a binder, a conductive material, and the like in the form of a film.

The information disclosed in this background section is intended to improve understanding of the background of the present disclosure. It may contain information that does not constitute the related or prior art.

### SUMMARY OF THE DISCLOSURE

The present disclosure is directed to providing a method of manufacturing an electrode for a rechargeable lithium battery that includes a dry electrode film including a particulate (or fine) active material, with the dry electrode film having improved flexibility.

The present disclosure is also directed to providing a method of manufacturing an electrode for a rechargeable lithium battery that includes a dry electrode film including a particulate (or fine) active material, with the dry electrode film having improved tensile strength.

However, technical problems to be solved by the present invention are not limited to the problems described herein, and other problems not mentioned herein will be clearly understood by those skilled in the art from the descriptions herein.

According to an aspect of the present disclosure, there is provided a method of manufacturing an electrode for a rechargeable lithium battery, which includes preparing granules including a first positive electrode active material and a first binder, forming a dry electrode film from a mixture of the granules, a second positive electrode active material and a second binder, and laminating the dry electrode film onto a current collector and rolling the laminated dry electrode film, wherein the granules have a D90 size of 100 µm or less, and the second positive electrode active material has a D50 average size of 3 µm or less.

The first positive electrode active material has a D50 average size of 3 µm or less. The granules have a D50 average size of 50 µm or less.

In the dry electrode film, the first positive electrode active material is included in an amount of 50 to 95% by weight and the second positive electrode active material is included in an amount of 5 to 50% by weight, based on the total weight of the first positive electrode active material and the second positive electrode active material.

The first positive electrode active material and the second positive electrode active material are each a lithium iron phosphate-based compound, a lithium nickel-based oxide, a lithium cobalt-based oxide, a lithium manganese-based oxide, a cobalt-free lithium nickel-manganese-based oxide, or a combination thereof.

The first positive electrode active material and the second positive electrode active material are each a lithium iron phosphate-based compound.

In the dry electrode film, the first binder is included in an amount of 20 to 50% by weight and the second binder is included in an amount of 50 to 80% by weight, based on the total weight of the first binder and the second binder.

A weight ratio of the first positive electrode active material to the binder in the granules is 50:1 to 90:1.

A weight ratio of the granules to the second positive electrode active material is 60:1 to 99:1.

The preparing of the granules includes kneading and pulverizing a mixture of the first positive electrode active material and the first binder.

The mixture of the granules, the second positive electrode active material, and the second binder are kneaded, pulverized, and calendered.

The D50 average size of the granules is greater than the D50 average size of the second positive electrode active material.

The granules further include a first conductive material.

The mixture of the granules, the second positive electrode active material, and the second binder further includes a second conductive material.

The granules include 60 to 90 parts by weight of the first positive electrode active material having a D50 average size of 3 µm or less, 0.5 to 3 parts by weight of the first conductive material, and 0.5 to 3 parts by weight of the first binder; and the mixture of the granules, the second positive electrode active material, and the second binder includes 5 to 30 parts by weight of the second positive electrode active material having a D50 average size of 3 µm or less, 0.5 to 3 parts by weight of the second conductive material, and 0.5 to 3 parts by weight of the second binder.

The dry electrode film has an elongation rate of 1.45% or more and a tensile strength of 0.4 MPa or more.

According to another aspect of the present disclosure, there is provided an electrode for a rechargeable lithium battery that includes a current collector and a dry electrode film disposed on the current collector, wherein the dry electrode film include granules including a first positive electrode active material and a first binder; a second positive electrode active material; and a second binder, wherein the granules have a D90 size of 100 µm or less, and the second positive electrode active material has a D50 average size of 3 µm or less.

The first positive electrode active material and the second positive electrode active material are each a lithium iron phosphate-based compound.

The dry electrode film has an elongation rate of 1.45% or more and a tensile strength of 0.4 MPa or more.

According to still another aspect of the present disclosure, there is provided a rechargeable lithium battery including the electrode for a rechargeable lithium battery.

### BRIEF DESCRIPTION OF THE DRAWINGS

The drawings illustrate preferred embodiments of the present disclosure and further describe aspects and features of the present disclosure together with the detailed description herein. The present disclosure should not be construed as being limited to the embodiments depicted in the drawings.
FIG. 1 illustrates a dry electrode for a rechargeable lithium battery according to one an embodiment of the present disclosure.
FIGS. 2 to 5 illustrate rechargeable lithium batteries according to embodiments of the present disclosure.
FIG. 6 is an SEM (scanning electron microscope) image of a dry electrode film made in Example 1.
FIG. 7 is an SEM image of a dry electrode film made in Comparative Example 1.

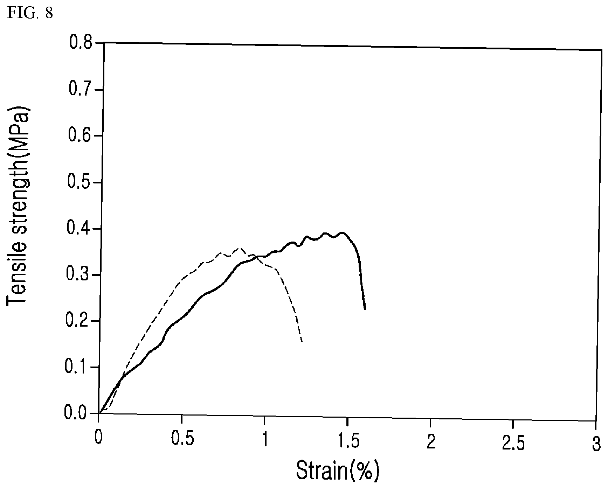

FIG. 8 shows the strain-to-tensile strength results of the dry electrode films made in Example 1(the solid line) and Comparative Example 1 (the dotted line).

### DETAILED DESCRIPTION OF EXEMPLARY EMBODIMENTS

Hereinafter, preferred embodiments of the present disclosure will be described in detail with reference to the attached drawings. It should be noted that the terms and words used in this specification and claims are not limited to their conventional or dictionary meanings. Based on the principle that inventors can appropriately define the concepts of terms to best describe their inventions, the terms and words should be construed with meanings and concepts consistent with the technical spirit of the present invention. Therefore, the embodiments described in this specification and the configurations depicted in the drawings represent only some of the most preferred embodiments of the present disclosure and do not represent the entire technical spirit of the present disclosure. Therefore, it should be understood that various equivalents and modifications may be substituted for them at the time of filing.

As used herein, the terms "comprise" and "include" and/or "comprising" and "including" specify the presence of stated shapes, numbers, steps, operations, elements, components, and/or groups thereof, and do not preclude the presence or addition of one or more other shapes, numbers, operations, elements, elements, and/or groups. Furthermore, to facilitate understanding of the disclosure, the attached drawings may not be drawn to scale and the dimensions of some components may be exaggerated. Furthermore, identical components in different embodiments may be assigned the same reference numerals.

References to two compared objects being "identical" mean "substantially identical." Therefore, "substantially identical" may include variations considered low in the art, for example, within 5%. Furthermore, uniformity of a parameter over a given region may imply uniformity on average.

Although terms such as "first," "second," etc. are used to describe various components, these components are not limited by these terms. These terms are used solely to distinguish one component from another, and unless otherwise stated, a "first" component may also be a "second" component.

Throughout the specification, unless otherwise stated, each component may be singular or plural. The phrase "above (or below)" or "above (or below)" a component may mean that the component is positioned not only in contact with the top (or bottom) surface of the component, but also that other components may be interposed between the component and any component positioned above (or below) the component.

When a component is described as being "connected," "coupled," or "connected" to another component, it should be understood that the components may be directly connected or connected to each other, but that other components may also be "interposed" between the components, or that the components may be "connected," "coupled," or "connected" through other components. When a part is said to be electrically coupled to another part, this includes not only direct connection but also connection with other elements interposed between them.

Throughout the specification, references to "A and/or B" mean A, B, or A and B, unless otherwise specified. That is, "and/or" includes all or any combination of the listed items. "C through D" means C or more and D or less, unless otherwise specifically stated.

In the specification, " average size (D50)" and "D50 average size" refers to a volume average (mean) particle size indicating the size of particles at a cumulative volume of 50 vol% in the particle size distribution, i.e., the volume of particles less than the average particle size accounts for 50% of the total sample volume, and likewise, the volume of particles greater than the average particle size is also 50%. Particle size distribution may be measured by a method widely known to those of ordinary skill in the art. For example, the particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D50 value may be obtained by being calculated from the above method. Alternatively, the particle size distribution may be measured using a laser diffraction method. When measuring by laser diffraction, for example, particles to be measured may be dispersed in a dispersion medium, irradiated with approximately 28 kHz ultrasonic waves at an output of 60 W by introducing it into a commercially available laser diffraction particle size measuring device (e.g., Microtrac MT 3000), and D50 may be calculated based on 50% of the particle size distribution using the measuring device.

In this specification, "size D90" and "D90 size" refers to the size of particles having a cumulative volume of 90% by volume in the particle size distribution. The size D90 can be measured with reference to the method described for the average size D50.

The terminology used herein is for the purpose of describing embodiments of the present disclosure and is not intended to be limiting of the present disclosure.

A dry electrode for a rechargeable lithium battery includes a current collector and a dry electrode film disposed on the current collector, with the dry electrode film including an active material and a binder.

The dry electrode for a rechargeable lithium battery may be made by making a dry electrode film including an active material and a binder, and laminating the dry electrode film onto a current collector and rolling the laminate.

According to the present disclosure, the processability in making the dry electrode may be enhanced by increasing the flexibility of the dry electrode film including a particulate (or fine) active material, thereby preventing breakage during the rolling.

Hereinafter, a method of manufacturing a dry electrode according to an exemplary embodiment will be described.

The manufacturing method includes preparing granules including a first positive electrode active material and a first binder, making a dry electrode film from a mixture of the granules, a second positive electrode active material and a second binder, and laminating the dry electrode film onto a current collector and rolling the laminate, wherein the granules have a size D90 of 100 µm or less, and the second positive electrode active material has an average size D50 of 3 µm or less. Within these ranges, the capacity of the electrode may be increased by increasing the compaction density (or compressed density) of the dry electrode. In some examples, the second positive electrode active material may have an average size D50 of 0.1 to 3 µm, for example, 1 to 3 µm or 1 to 2 µm.

In a specific embodiment, the first positive electrode active material may have an average size D50 of 3 µm or less. In this range, the electrode manufacturing may be enhanced because the first positive electrode active material has substantially the same value as the average size D50 of the second positive electrode active material. The first positive electrode active material may have an average size D50 of 0.1 to 3 µm, for example, 1 to 3 µm or 1 to 2 µm. When a positive electrode active material having an average size D50 of 3 µm or less is used alone as the active material in the dry electrode film or used together with a binder to make a dry electrode film, a space formed between the positive electrode active materials is small. As such, fiberization of the binder is not sufficiently achieved, and even when the fiberization of the binder progresses, the length of the fibers may be short. This may cause breakage of the dry electrode film during the process of forming the dry electrode film or during the rolling process.

In the manufacturing method according to an embodiment, granules including a first positive electrode active material and a first binder are prepared, wherein the granules have a size D90 of 100 µm or less (step 1). Then, a dry electrode film is made from a mixture of the granules, a second positive electrode active material, and a second binder (step 2).

A dry electrode film made by only performing step 1 above has a space secured between the positive electrode active materials, but the size of the space is too large. Therefore, the fiberization of the binder may not be sufficiently achieved due to the low degree of friction between the positive electrode active materials. This may result in breakage during the process of forming the dry electrode film or during the rolling process.

A dry electrode film made by only performing step 2 above has too small of space between the positive electrode active materials. Thus, there is insufficient fiberization between the positive electrode active material in the space, which may result in breakage during the process of forming the dry electrode film or during the rolling process.

### (Step 1)

In step 1, granules including a first positive electrode active material and a first binder are prepared, wherein the granules have a size D90 of 100 µm or less. When the second positive electrode active material having an average size D50 of 3 µm or less is applied with granules of the first positive electrode active material of this size, breakage may be prevented during the manufacturing process of the dry electrode film or during the rolling process. In a specific embodiment, the granules of the first positive electrode active material may have a size D90 of 1 to 100 µm, for example, 50 to 100 µm, for example, 70 to 100 µm. In these ranges, the amounts of the first positive electrode active material and the second positive electrode active material may be easily controlled, which makes it easy to make the dry electrode.

In a specific embodiment, the granules may be aggregates of the first positive electrode active material and the first binder. In particular, the granules may be aggregates in which the first positive electrode active material and the first binder are aggregated to have a predetermined shape.

The granules of the first positive electrode active material may have an average size D50 of 60 µm or less, for example 30 µm or less, for example, 5 to 20 µm, for example, 20 to 40 µm, for example, 40 to 60 µm. Within these ranges, there be enhanced flexibility in the positive electrode formed with the granules.

In a specific embodiment, the average size D50 of the granules may be larger than the average size D50 of the second positive electrode active material. In this case, when combined with the second positive electrode active material having an average size D50 of 3 µm or less, it may be advantageous for enhancing the manufacturing processability of the dry electrode.

The granules may be prepared by preparing a granule composition including the first positive electrode active material and the first binder, and then kneading and pulverizing the granule composition. The granules thus made are not easily broken even when mixed, kneaded, and pulverized with the second positive electrode active material and the second binder, which may be advantageous for the manufacturing of the dry electrode.

The granule composition may be prepared by mixing the first positive electrode active material and the first binder.

The first positive electrode active material and the first binder may be included in a weight ratio (first positive electrode active material : first binder) of 50:1 to 90:1. In this range, the preparation of the granules may be facilitated, and the capacity improvement effect of the dry electrode may be provided because an appropriate amount of the binder is included in the dry electrode. In other examples, the first positive electrode active material and the first binder may be included in a weight ratio of 50:1 to 80:1 such as 60:1 to 80:1 or 65:1 to 75:1. In specific embodiments, the first positive electrode active material and the first binder in the granules may be included in a weight ratio of 50:1 to 90:1, for example, a weight ratio of 60:1 to 80:1 or 65:1 to 75:1.

The granule composition may further include a first conductive material. The first conductive material may further increase the capacity of the battery by increasing the conductivity of the granules.

The first positive electrode active material and the first conductive material may be included in a weight ratio (first positive electrode active material : first conductive material) of 50:1 to 90:1. Within this range, the preparation of the granules may be facilitated, and the conductivity of the granules may be enhanced, thereby improving the capacity of the dry electrode. In examples, the first positive electrode active material and the first conductive material may be included in a weight ratio of 50:1 to 80:1 such as 60:1 to 80:1, or 65:1 to 75:1. In other embodiments, the first positive electrode active material and the first conductive material in the granules may be included in a weight ratio of 50:1 to 90:1, for example, 60:1 to 80:1, or 65:1 to 75:1.

The first binder and the first conductive material may be included in a weight ratio (first binder : first conductive material) of 1:0.1 to 1:5. Within this range, the preparation of the granules may be facilitated, and the conductivity of the granules may be enhanced, thereby improving the capacity of the dry electrode. For example, the first binder and the first conductive material may be included in a weight ratio of 1:0.5 to 1:3, for example, 1:0.5 to 1:2. In specific embodiments, the first binder and the first conductive material in the granules may be included in a weight ratio of 1:0.1 to 1:5, for example, a weight ratio of 1:0.5 to 1:3, for example, 1:0.5 to 1:2.

The granules may be prepared by kneading and pulverizing the granule composition.

The kneading includes forming a mixture mass having a solid content of 100% by weight by combining or connecting the first positive electrode active materials and/or the first conductive material while fiberizing the first binder.

The kneading may be conducted at a speed of 10 rpm to 100 rpm. For example, the kneading may be conducted at a speed of 40 rpm or more or 70 rpm or less within the above range. The kneading may be performed for 1 minute to 30 minutes. For example, the kneading may be performed at a speed of 40 rpm to 70 rpm for 3 minutes to 7 minutes. The kneading may be conducted at a shear rate in the range of 10/s to 500/s. For example, the kneading may be performed for 1 minute to 30 minutes, and the shear rate may be controlled in the range of 30/s to 100/s.

The kneading may be performed at a high temperature and at a pressure higher than atmospheric pressure. More specifically, the kneading may be performed at a temperature of 70°C to 200°C, and more specifically, a temperature of 90°C to 150°C for the granule composition.

In terms of pressure, the kneading may be performed at a pressure equal to or higher than atmospheric pressure, specifically 1 atm to 3 atm, and more specifically 1.1 atm to 3 atm. When the kneading is performed at an excessively high pressure beyond these ranges, there may be a problem that the first binder may break due to the excessive shear force and pressure applied or the density of the mixture mass may become too high. But, when a low-shear mixing process is performed under the conditions of a high temperature and a pressure higher than atmospheric pressure instead of high-shear mixing, the desired effects of the present disclosure may be achieved.

The next step is pulverizing the mixture mass prepared by the kneading to obtain a powder for electrodes. The pulverization may be performed using a known pulverizing device such as a blender, a grinder, or the like. In a specific embodiment, the pulverization speed is within the range of 3,000 rpm to 30,000 rpm and conducted for 1 second to 10 minutes. However, the pulverization speed and time are not limited to these ranges. In specific examples, the pulverization may be performed at a speed of 5,000 rpm to 20,000 rpm for 30 seconds to 10 minutes, or at a speed of 10,000 rpm to 18,000 rpm for 30 seconds to 5 minutes. By performing sufficient pulverization within these ranges, film formation may be facilitated and the degree of fine powder generation may be reduced.

### (Step 2)

In step 2, a dry electrode film is made from a mixture of the granules, the second positive electrode active material, and the second binder. Here a composition for a dry electrode film including the granules, the second positive electrode active material, and the second binder is prepared, and a dry electrode film is made from the composition for a dry electrode film. The composition for a dry electrode film may be prepared by mixing the granules described above, the second positive electrode active material, and the second binder.

The mixture of the granules and the second positive electrode active material and the second binder may be in a weight ratio (the mixture of the granules and the second positive electrode active material : the second binder) of 60:1 to 99:1. Within this range, an appropriate amount of the binder is included in the dry electrode, and the capacity of the dry electrode may be improved. In further examples, the mixture of the granules and the second positive electrode active material and the second binder may be in a weight ratio (the mixture of the granules and the second positive electrode active material : the second binder) of 60:1 to 90:1 such as 60:1 to 80:1.

The composition for a dry electrode film may further include a second conductive material. The second conductive material may further increase the capacity of the battery by enhancing the conductivity of the dry electrode film.

The mixture of the granules and the second positive electrode active material and the second conductive material may be included in a weight ratio (the mixture of the granules and the second positive electrode active material : the second conductive material) of 60:1 to 99:1 such as 60:1 to 90:1or 60:1 to 80:1. In these ranges, the conductivity of the dry electrode film may be enhanced and thereby improving the capacity of the dry electrode.

The second binder and the second conductive material may be included in a weight ratio the second binder : the second conductive material) of 1:0.1 to 1:5. Within this range, the conductivity of the dry electrode film may be enhanced to thereby improve the capacity of the dry electrode. In examples, the second binder and the second conductive material may be included in a weight ratio of 1:0.5 to 1:3 such as 1:0.5 to 1:2. In embodiment, the second binder and the second conductive material in the dry electrode film may be included in a weight ratio (the second binder : the second conductive material) of 1:0.1 to 1:5 such as a weight ratio of 1:0.5 to 1:3 or 1:0.5 to 1:2.

A dry electrode film is made from the composition for a dry electrode film. The dry electrode film may be made by kneading and pulverizing the composition for a dry electrode film, followed by calendering. The kneading and the pulverization may be as the kneading and pulverization described above in the preparation of the above-described granules. An electrode powder is formed by the kneading and the pulverization.

The calendering involves hot-pressing the electrode powder to make a dry electrode film. Specifically, the electrode powder obtained from the pulverization step is subjected to a calendering process.

The electrode powder may be formed into a sheet-shaped dry electrode film by hot-pressing through the calendering process. The calendering process may be performed by a pair of calendering rollers. The calendering process may be performed by passing the electrode powder through a plurality of calendering rollers.

The electrode powder may be pretreated before performing the calendaring process. The pretreatment process may be performed by applying heat to the electrode powder so that the temperature of the powder may be maintained at 80°C or higher, preferably 100°C or higher, for a predetermined period of time. The pretreatment process time may be 1 minute or longer and may be adjusted depending on the amount of electrode powder. For example, the temperature of the powder may be maintained at a temperature of 80°C or higher for 1 minute or longer or may be maintained at a temperature of 100°C or higher for 1 minute or longer. In some embodiments, the heating temperature of the electrode powder is preferably controlled to be below the melting point of a binder resin to prevent deterioration of electrode components included in the electrode powder. For example, the heating temperature of the electrode powder may be controlled to be 320°C or less. The pretreatment process may be performed using a common heating device, such as a convection oven or an infrared heating device. In some embodiments, the electrode powder is not stagnant while being stirred and heated.

The dry electrode film may include the first positive electrode active material and the second positive electrode active material. In a mixture of the first positive electrode active material and the second positive electrode active material, the first positive electrode active material may be included in an amount of 50 to 95% by weight, 55 to 95% by weight, or 50 to 90% by weight, and the second positive electrode active material may be included in an amount of 5 to 50% by weight, 10 to 50% by weight, or 5 to 45% by weight, based on the total weight of the first positive electrode active material and the second positive electrode active material. In these ranges, and when the positive electrode active material having an average size of 3 µm or less is included in an appropriate weight range in the granules and the powder, flexibility of the dry electrode film is improved and the dry electrode film can be made without breakage. In the mixture of the first positive electrode active material and the second positive electrode active material, the first positive electrode active material may be included in an amount of 60 to 90% by weight, and the second positive electrode active material may be included in an amount of 10 to 40% by weight. Preferably, the first positive electrode active material may be included in an amount of 60 to 80% by weight, and the second positive electrode active material may be included in an amount of 20 to 40% by weight.

The dry electrode film may be made by preparing granules including 60 to 90 parts by weight of the first positive electrode active material having an average size D50 of 3 µm or less, 0.5 to 3 parts by weight of the first conductive material, and 0.5 to 3 parts by weight of the first binder, and the dry electrode film may be made from a mixture including the prepared granules, 5 to 30 parts by weight of the second positive electrode active material having an average size D50 of 3 µm or less, 0.5 to 3 parts by weight of the second conductive material, and 0.5 to 3 parts by weight of the second binder. In these ranges, flexibility of the dry electrode film is improved and the dry electrode film can be formed without breakage.

The dry electrode film may have an elongation rate of 1.45% or more and a tensile strength of 0.4 MPa or more. Within these ranges, even when the dry electrode film is laminated onto a current collector and then the laminate is rolled, the film may have high flexibility thereby reducing the possibility of breakage during a roll-to-roll calendering process. For example, the elongation rate may be 1.45 to 5%, 1.5 to 5%, such as 1.5 to 3%, and the tensile strength may be 0.4 to 5 MPa such as 0.4 to 3 MPa.

The dry electrode for a rechargeable lithium battery may be made by laminating the dry electrode film onto a current collector and rolling the laminated dry electrode film.

The current collector is not limited as long as it provides high conductivity without causing undesirable chemical changes in the battery. For example, stainless steel, aluminum, nickel, titanium, sintered carbon, copper, or aluminum may be used as the current collector. In other embodiments, stainless steel, copper foil, nickel foil, stainless steel foil, titanium foil, nickel foam, copper foam, a conductive metal-coated polymer substrate whose surface is treated with carbon, nickel, titanium, silver, and the like may be used. The current collector may also have an unevenness on its surface to increase the adhesion of the electrode active material, and the current collector may be in various forms such as films, sheets, foil, nets, porous bodies, foams, non-woven fabrics, or the like. In embodiments of the present disclosure, the current collector may have a thickness of 10 µm to 50 µm, but the present disclosure is not limited thereto. In more specific examples, the current collector may have a thickness of 10 µm to 20 µm.

The rolling may be performed by passing the laminate of the current collector and the dry electrode film between rolling rolls.

Hereinafter, the first positive electrode active material, the second positive electrode active material, the first binder, the second binder, the first conductive material, and the second conductive material will be described in detail.

The first positive electrode active material and the second positive electrode active material may be the same or different from each other. The first binder and the second binder may be the same or different from each other. The first conductive material and the second conductive material may be the same or different from each other.

### Positive electrode active material

As the positive electrode active material, a compound capable of reversible intercalation and deintercalation of lithium (a lithiated intercalation compound) may be used. Specifically, at least one of composite oxides of lithium and a metal selected from cobalt, manganese, nickel, and a combination thereof may be used.

The composite oxide may be a lithium transition metal composite oxide. Specific examples of the composite oxide include a lithium nickel-based oxide, a lithium cobalt-based oxide, a lithium manganese-based oxide, a lithium iron phosphate-based compound, a cobalt-free lithium nickel-manganese-based oxide, or a combination thereof. As examples, a compound represented by any one of the following chemical formulas may be used: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0 < α < 2); LiₐNi_{1-b-c}Mn₈X_{c}O_{2-α}D_{α} (0.90 ≤ a ≤ 1.8, 0 ≤ b ≤ 0.5, 0 ≤ c ≤ 0.5, 0 < α < 2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8). In these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may include, for example, a lithium nickel-based oxide represented by the following Chemical Formula 1, a lithium cobalt-based oxide represented by the following Chemical Formula 2, a lithium iron phosphate-based compound represented by the following Chemical Formula 3, a cobalt-free lithium nickel-manganese-based oxide represented by the following Chemical Formula 4, or a combination thereof.

In a specific embodiment, the positive electrode active material may be a represented by the following Chemical Formulas 1-4.

[Chemical Formula 1] Liₐ₁Niₓ₁M¹_{y1}M²_{z1}O_{2-b1}X_{b1}

wherein 0.9 ≤ a1 ≤ 1.8, 0.3 ≤ x1 ≤ 1, 0 ≤ y1 ≤ 0.7, 0 ≤ z1 ≤ 0.7, 0.9 ≤ x1 + y1 + z1 ≤ 1.1, and 0 ≤ b1 ≤ 0.1, M¹ and M² are each independently one or more of Al, B, Ba, Ca, Ce, Co, Cr, Cu, Fe, Mg, Mn, Mo, Nb, Si, Sn, Sr, Ti, V, W, and Zr, and X is one or more of F, P, and S. In further embodiments of Chemical Formula 1, 0.6 ≤ x1 ≤ 1, 0 ≤ y1 ≤ 0.4, and 0 ≤ z1 ≤ 0.4, or 0.8 ≤ x1 ≤ 1, 0 ≤ y1 ≤ 0.2, and 0 ≤ z1 ≤ 0.2 may be satisfied.

[Chemical Formula 2] Liₐ₂Coₓ₂M³_{y2}O_{2-b2}X_{b2}

wherein 0.9 ≤ a2 ≤ 1.8, 0.7 ≤ x2 ≤ 1, 0 ≤ y2 ≤ 0.3, 0.9 ≤ x2 + y2 ≤ 1.1, and 0 ≤ b2 ≤ 0.1, M³ is one or more of Al, B, Ba, Ca, Ce, Cr, Cu, Fe, Mg, Mn, Mo, Ni, Se, Si, Sn, Sr, Ti, V, W, Y, Zn, and Zr, and X is one or more of F, P, and S.

[Chemical Formula 3] Liₐ₃Feₓ₃M⁴_{y3}PO_{4-b3}X_{b3}

wherein 0.9 ≤ a3 ≤ 1.8, 0.6 ≤ x3 ≤ 1, 0 ≤ y3 ≤ 0.4, and 0 ≤ b3 ≤ 0.1, M⁴ is one or more of Al, B, Ba, Ca, Ce, Co, Cr, Cu, Mg, Mn, Mo, Ni, Se, Si, Sn, Sr, Ti, V, W, Y, Zn, and Zr, and X is one or more of F, P, and S.

[Chemical Formula 4] Liₐ₄Niₓ₄Mn_{y4}M⁵_{z4}O_{2-b4}X_{b4}

wherein 0.9 ≤ a2 ≤ 1.8, 0.8 ≤ x4 < 1, 0 < y4 ≤ 0.2, 0 ≤ z4 ≤ 0.2, 0.9 ≤ x4 + y4 + z4 ≤ 1.1, and 0 ≤ b4 ≤ 0.1, M⁵ is one or more of Al, B, Ba, Ca, Ce, Cr, Fe, Mg, Mo, Nb, Si, Sn, Sr, Ti, V, W, and Zr, and X is one or more of F, P, and S.

### Binder

The binder may include polytetrafluoroethylene (PTFE), a polyolefin, or a mixture thereof. Specifically, the binder may include polytetrafluoroethylene, and more specifically, may be polytetrafluoroethylene. The polytetrafluoroethylene may be included in an amount of 60% by weight or more, for example, 90 to 100% by weight, based on the total weight of the binder.

In another embodiment, the binder may further include a non-fiberized binder. The non-fiberized binder may include, for example, one or more of polyethylene oxide, polyvinylidene fluoride, and polyvinylidene fluoride-co-hexafluoropropylene.

In a specific embodiment, the binder may be included in a fiberized state in the dry electrode film.

### Conductive material

Carbon black-based materials, graphite such as natural graphite or artificial graphite; conductive fibers such as carbon fibers, metal fibers, and the like; fluorocarbon, metal powders such as aluminum, nickel powder, and the like; conductive whiskers such as zinc oxide, potassium titanate, and the like; conductive metal oxides such as titanium oxide and the like; conductive polymers such as polyphenylene derivatives, and the like may be used as the conductive material.

In embodiments, the dry electrode film may include 80 to 99.5% by weight, for example, 80 to 99%, or 90 to 99.5% by weight, of a positive electrode active material including a first positive electrode active material and a second positive electrode active material, 0.5 to 20% by weight, for example, 0.5 to 10% by weight, of a binder including a first binder and a second binder, and 0 to 20% by weight, for example, 0.5 to 20% by weight, or 0.5 to 10% by weight, of a conductive material including a first conductive material and a second conductive material. Within these ranges, the dry electrode film may be easily made and PTFE fiberization within the electrode may be promoted, thereby improving mechanical strength of the electrode.

A dry electrode film for a rechargeable lithium battery according to an embodiment includes a dry electrode film including granules including a first positive electrode active material and a first binder; a second positive electrode active material; and a second binder, wherein the granules of the first positive electrode active material have a size D90 of 100 µm or less, and the second positive electrode active material has an average size D50 of 3 µm or less.

The first positive electrode active material, the first binder, the second positive electrode active material, the second binder, and the granules are each as described above.

The dry electrode film may have a thickness of 10 µm or more, for example, 10 to 200 µm.

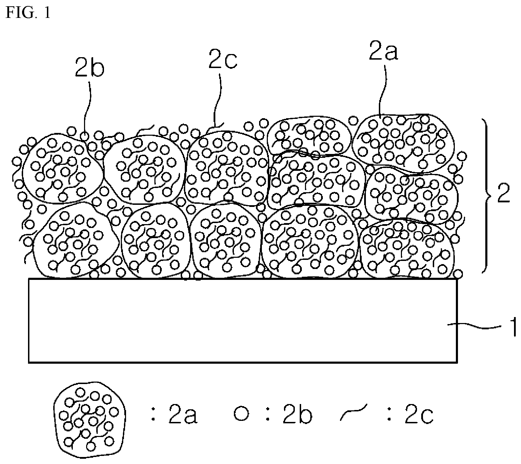

FIG. 1 illustrates a dry electrode for a rechargeable lithium battery according to an embodiment of the present disclosure. Referring to FIG. 1, the dry electrode for a rechargeable lithium battery may include a current collector 1 and a rolled dry electrode film 2 disposed on the current collector 1. The rolled dry electrode film 2 may include granules 2a, a second positive electrode active material 2b, and a second binder 2c.

The battery may include the dry electrode for a rechargeable lithium battery and a negative electrode.

### Negative electrode

A negative electrode for a rechargeable lithium battery may include a current collector and a negative electrode active material layer disposed on the current collector. The negative electrode active material layer includes a negative electrode active material and may further include a binder and/or a conductive material. In some examples, the negative electrode active material layer may include 90% by weight to 99% by weight of the negative electrode active material, 0.5% by weight to 5% by weight of the binder, and 0% by weight to 5% by weight of the conductive material.

### Negative electrode active material

The negative electrode active material includes a material capable of reversible intercalation/deintercalation of lithium ions, lithium metal, an alloy of lithium and a metal, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Examples of the crystalline carbon include graphite such as natural graphite or artificial graphite in an amorphous, plate-like, flaky, spherical, or fibrous form, and examples of the amorphous carbon include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, SiOₓ (0 < x < 2), a Si-Q alloy, or a combination thereof. In the formula Si-Q, Q is selected from an alkali metal, an alkaline earth metal, a Group 13 element, a Group 14 element (excluding Si), a Group 15 element, a Group 16 element, a transition metal, a rare earth element, and a combination thereof. The Sn-based negative electrode active material may be Sn, SnO₂, a Sn-based alloy, or a combination thereof.

The silicon-carbon composite may be a composite of silicon and amorphous carbon. The silicon-carbon composite may be in the form of silicon particles whose surfaces are coated with amorphous carbon. For example, the composite may include secondary particles (core) in which primary particles of silicon are assembled, and an amorphous carbon coating layer (shell) disposed on the surfaces of the secondary particles. The amorphous carbon may also be disposed between the primary particles of silicon, for example, such that the primary particles of silicon can be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer disposed on the surface of the core.

The Si-based negative electrode active material or the Sn-based negative electrode active material may be used in combination with the carbon-based negative electrode active material.

The binder functions to adhere negative electrode active material particles to each other and also adhere the negative electrode active material to the current collector. A non-aqueous binder, an aqueous binder, a dry binder, or a combination thereof may be used as the binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound capable of imparting viscosity may be further included. As the cellulose-based compound, one or more types of carboxymethyl cellulose, hydroxypropylmethyl cellulose, methyl cellulose, or an alkali metal salt thereof may be mixed and used. As the alkali metal, Na, K or Li may be used.

The dry binder is a polymeric material capable of being fiberized, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrodes, and any material may be used that it is electronically conductive and does not cause undesirable chemical changes in a battery. Specific examples of the conductive material include carbon-based materials such as natural graphite, artificial graphite, carbon black, acetylene black, Ketjen black, carbon fibers, carbon nanofibers, carbon nanotubes, and the like; metal-based materials in the form of a metal powder or metal fibers containing copper, nickel, aluminum, silver, and the like; conductive polymers such as polyphenylene derivatives and the like; or a mixture thereof.

As the negative electrode current collector, any one of copper foil, nickel foil, stainless steel foil, titanium foil, nickel foam, copper foam, a polymer substrate coated with a conductive metal, and a combination thereof may be used.

The rechargeable lithium battery may further include an electrolyte. The electrolyte for a rechargeable lithium battery may include a non-aqueous organic solvent and a lithium salt.

The non-aqueous organic solvent acts as a medium through which ions involved in the electrochemical reaction of the battery can move. The non-aqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, and the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, and the like may be used. Also, cyclohexanone and the like may be used as the ketone-based solvent. Ethyl alcohol, isopropyl alcohol, and the like may be used as the alcohol-based solvent, and nitriles such as R-CN (wherein R is a linear, branched, or cyclic hydrocarbon group having 2 to 20 carbon atoms and may contain a double bond, an aromatic ring, or an ether group), and the like; amides such as dimethylformamide and the like; dioxolanes such as 1,3-dioxolane 1,4-dioxolane, and the like; sulfolanes, and the like may be used as the aprotic solvent.

The non-aqueous organic solvents may be used alone or in combination of two or more thereof. When the carbonate-based solvent is used, a cyclic carbonate and a chain carbonate may be mixed and used. In this case, the cyclic carbonate and the chain carbonate may be mixed in a volume ratio of 1:1 to 1:9.

The lithium salt is a material that is dissolved in an organic solvent and acts as a source of lithium ions within the battery, thereby enabling the basic operation of a rechargeable lithium battery and promoting the movement of lithium ions between the positive and negative electrodes. Representative examples of the lithium salt include one or more of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (where x and y are integers from 1 to 20), lithium trifluoromethane sulfonate, lithium tetrafluoroethane sulfonate, lithium difluorobis(oxalato)phosphate (LiDFBOP), and lithium bis(oxalato)borate (LiBOB).

Depending on the type of rechargeable lithium battery, a separator may be present between the positive and negative electrodes. Polyethylene, polypropylene, polyvinylidene fluoride, or a multilayer film of two or more layers thereof may be used as such a separator.

The separator may include a porous substrate and a coating layer disposed on one or both surfaces of the porous substrate and including an organic material, an inorganic material, or a combination thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic and inorganic materials may be present as a mixture in one coating layer, or present in a form in which a coating layer including the organic material and a coating layer including the inorganic material are stacked.

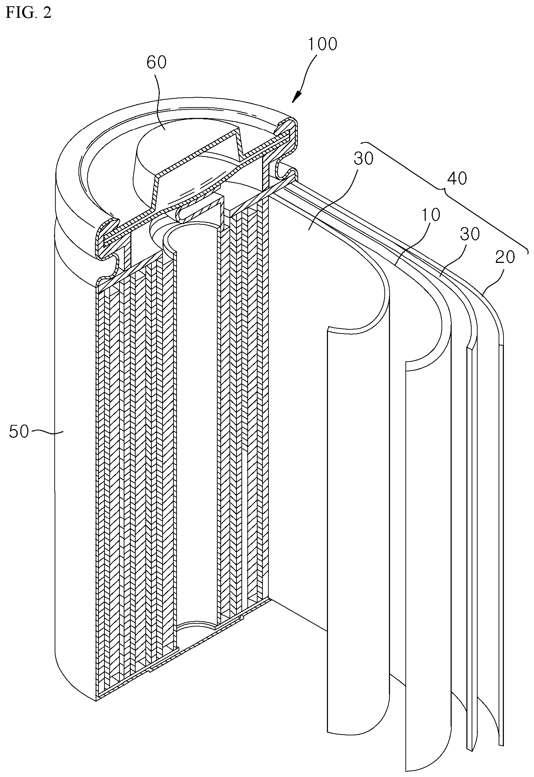

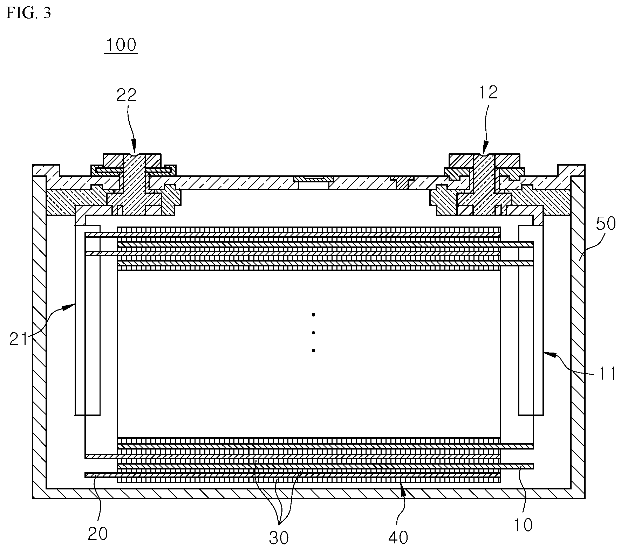

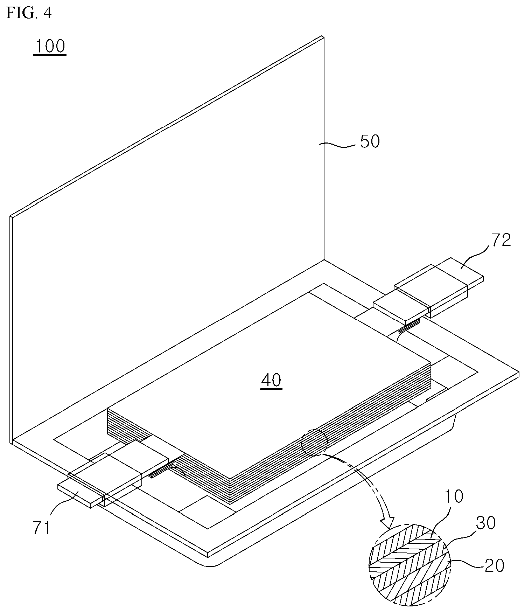

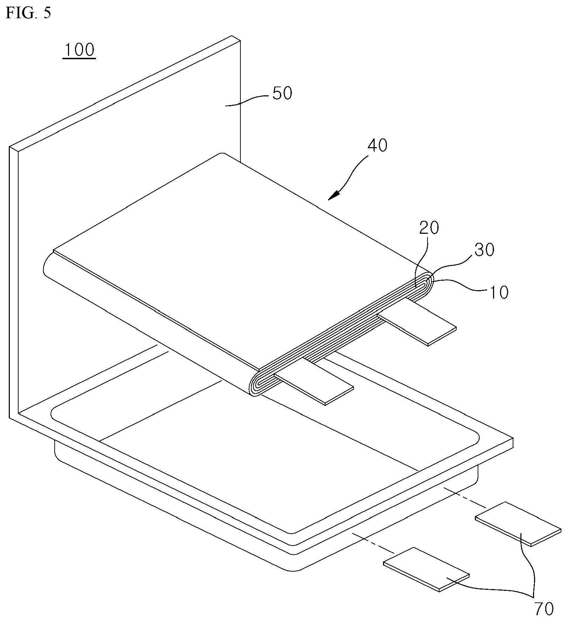

The rechargeable lithium battery may be cylindrical, prismatic, pouch-type, or coin-type batteries depending on its shape. FIGS. 2 to 5 are schematic diagrams showing rechargeable lithium batteries according to embodiments, wherein FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 having a separator 30 interposed between a positive electrode 10 and a negative electrode 20, and a case 50 into which the electrode assembly 40 is inserted. The positive electrode 10, the negative electrode 20, and the separator 30 may be impregnated with an electrolyte. The rechargeable lithium battery 100 may include a sealing member 60 configured to seal the case 50 as shown in FIG. 2. As depicted in FIG. 3, the rechargeable lithium battery 100 may include a positive electrode lead tab 11, a positive electrode terminal 12, a negative electrode lead tab 21, and a negative electrode terminal 22. As depicted in FIGS. 4 and 5, the rechargeable lithium battery 100 may include electrode tabs 70, i.e., a positive electrode tab 71 and a negative electrode tab 72, which serve as electrical paths configured to induct current generated in the electrode assembly 40 to outside of the battery.

The rechargeable lithium battery according to embodiments of the present disclosure may be used in automobiles, mobile phones, and/or various types of electrical devices, but the present disclosure is not limited to these examples.

The rechargeable lithium battery described above may be used to make a battery pack. A battery pack according to the present disclosure may include an assembly of individual batteries electrically connected to each other and a pack housing in which the batteries are accommodated. Parts such as bus bars for electrical connection between the batteries, a cooling unit, external terminals and the like may be further included.

The battery pack may be mounted in a vehicle. The vehicle may be, for example, an electric vehicle, a hybrid vehicle, or a plug-in hybrid vehicle. The vehicle may be a four-wheeled vehicle or a two-wheeled vehicle. The vehicle according to an embodiment includes the battery pack according to an embodiment of the present disclosure. The vehicle operates by receiving power from the battery pack.

Hereinafter, examples and comparative examples of the present disclosure will be described. However, it should be understood that the following examples are only examples of the present invention, and are not intended to limit the present invention.

### Example 1

### Manufacture of dry electrode film

70 parts by weight of a lithium iron phosphate (LFP)-based compound (spherical; average size D50: 3 µm) as a first positive electrode active material was mixed with 1 part by weight of polytetrafluoroethylene as a first binder and 1 part by weight of carbon black as a first conductive material to prepare a mixture. The resulting mixture was put into a blender and mixed at 10,000 rpm for 1 minute to obtain a mixture. The obtained mixture was put into a kneader and kneaded at 110 °C and at a speed of 60 rpm for 5 minutes to obtain a mixture mass. The mixture mass was put into a blender and pulverized at 14,000 rpm for 60 seconds to prepare granules (size D90: 100 µm, average size D50: 50 µm).

The prepared granules were mixed with 25 parts by weight of a lithium iron phosphate (LFP)-based compound (spherical; average size D50: 3 µm) as a second positive electrode active material, 1.5 parts by weight of polytetrafluoroethylene as a second binder, and 1.5 parts by weight of carbon black as a second conductive material to prepare a total of 100 parts by weight of a mixture.

The mixture was put into a blender and mixed at 10,000 rpm for 1 minute to obtain a mixture. The obtained mixture was put into a kneader and kneaded at 110 °C and 60 rpm for 5 minutes to obtain a mixture mass. The mixture mass was put into a blender and pulverized at 14,000 rpm for 60 seconds to prepare an electrode powder.

The electrode powder was repeatedly pressed using a calendering roller (roller diameter: 200 mm, roller temperature: 70°C) to obtain a dry electrode film (thickness: 150 µm).

### Manufacture of electrode

The dry electrode film was laminated onto a carbon-coated aluminum current collector to make an electrode.

### Example 2

An electrode was made in the same manner as in Example 1, except that the kneading and pulverization conditions were changed when making the granules (size D90: 70 µm, average size D50: 50 µm).

### Comparative Example 1

95 parts by weight of a lithium iron phosphate (LFP)-based compound (spherical; average size D50: 3 µm) as a positive electrode active material, 2.5 parts by weight of polytetrafluoroethylene as a binder, and 2.5 parts by weight of carbon black as a conductive material were mixed to prepare a mixture. The resulting mixture was put into a blender and mixed at 10,000 rpm for 1 minute to obtain a mixture. The obtained mixture was put into a kneader and kneaded at 110 °C and 60 rpm for 5 minutes to obtain a mixture mass. Thereafter, the mixture mass was put into a blender and pulverized at 14,000 rpm for 60 seconds to prepare an electrode powder (average size D50: 50 µm).

The electrode powder was repeatedly pressed using a calendering roller (roller diameter: 200 mm, roller temperature: 70°C) to obtain a dry electrode film (thickness: 150 µm).

### Comparative Example 2

### Manufacture of dry electrode film

70 parts by weight of a lithium iron phosphate (LFP)-based compound (spherical; average size D50: 3 µm) as a first positive electrode active material was mixed with 1 part by weight of polytetrafluoroethylene as a first binder and 1 part by weight of carbon black as a first conductive material to prepare a mixture. The resulting mixture was put into a blender and mixed at 10,000 rpm for 1 minute to obtain a mixture. The obtained mixture was put into a kneader and kneaded at 110 °C and 60 rpm for 5 minutes to obtain a mixture mass. Thereafter, the mixture mass was put into a blender and pulverized at 14,000 rpm to prepare granules (size D90: 120 µm, average size D50: 50 µm).

The prepared granules were mixed with 25 parts by weight of a lithium iron phosphate (LFP)-based compound (spherical; average size D50: 3 µm) as a second positive electrode active material, 1.5 parts by weight of polytetrafluoroethylene as a second binder, and 1.5 parts by weight of carbon black as a second conductive material to prepare a total of 100 parts by weight of a mixture.

The mixture was put into a blender and mixed at 10,000 rpm for 1 minute to obtain a mixture. The obtained mixture was put into a kneader and kneaded at 110 °C and 60 rpm for 5 minutes to obtain a mixture mass. Thereafter, the mixture mass was put into a blender and pulverized at 14,000 rpm for 60 seconds to prepare an electrode powder.

The electrode powder was repeatedly pressed using a calendering roller (roller diameter: 200 mm, roller temperature: 70°C) to obtain a dry electrode film (thickness: 150 µm).

### Manufacture of electrode

The dry electrode film was laminated onto a carbon-coated aluminum current collector to make a dry electrode.

The following physical properties were evaluated for the dry electrode films of the examples and the comparative examples.

### (1) SEM of dry electrode film

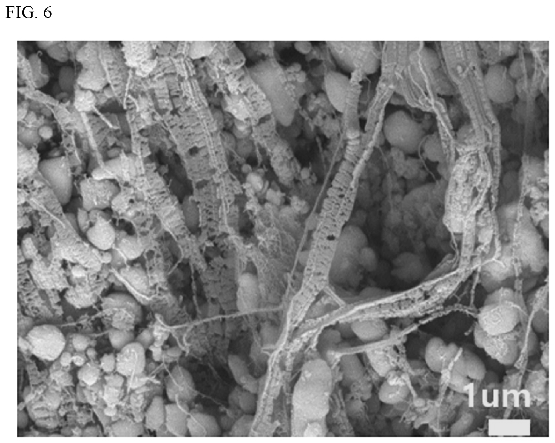

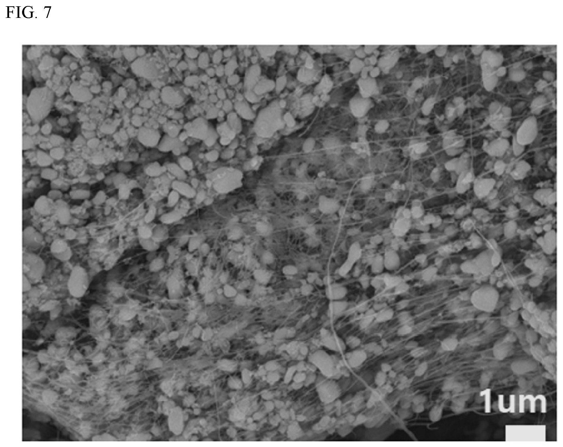

SEM images of the dry electrode films in the examples and comparative examples were taken. The images are shown in FIGS. 6 and 7.

As shown in FIG. 6, the dry electrode film of Example 1 had good fiberization between the active materials. As shown in FIG. 7, the fiberization between the active materials was not sufficiently achieved in the dry electrode film of Comparative Example 1.

### (2) Elongation rate (units: %) and tensile strength (units: MPa) of dry electrode film

Elongation rate and tensile strength were measured for the dry electrode films in the examples and the comparative examples. Specifically, the dry electrode films were measured using a universal testing machine (UTM) device according to the ASTM D638 method. The results are shown in Table 1.

**Table 1**

| | Elongation Rate | Tensile Strength |
|---|---|---|
| Example 1 | 1.59 | 0.41 |
| Example 2 | 1.45 | 0.40 |
| Comparative Example 1 | 1.21 | 0.35 |
| Comparative Example 2 | 1.23 | 0.36 |

As shown in Table 1, the dry electrode films of the examples included a particulate active material and, thus, had improved flexibility and tensile strength. However, the dry electrode films of the comparative examples had an inferior elongation rate and inferior tensile strength compared to the dry electrode films of the examples.

According to the present disclosure, the manufacturing processability of a dry electrode for a rechargeable lithium battery including a particulate active material can be enhanced by making a dry electrode film including the particulate active material and having improved flexibility and tensile strength.

However, the effects that can be achieved through the present disclosure are not limited to the effect described above, and other technical effects not mentioned herein will be clearly understood by those skilled in the art.

While the present disclosure has been described with reference to the limited embodiments and drawings, the present disclosure is not limited thereto. Various modifications and variations can be made within the scope of the technical spirit of the present disclosure.

## Claims

1. A method of manufacturing a dry electrode for a rechargeable lithium battery, the method comprising:
preparing granules including a first positive electrode active material and a first binder;
forming a dry electrode film from a mixture of the granules, a second positive electrode active material, and a second binder; and
laminating the dry electrode film onto a current collector and rolling the laminated dry electrode film,
wherein the granules have a D90 size of 100 µm or less, and
wherein the second positive electrode active material has a D50 average size of 3 µm or less.

2. The method of claim 1, wherein the first positive electrode active material has a D50 average size of 3 µm or less; and/or wherein the granules have a D50 average size of 50 µm or less.

3. The method of claims 1 or 2, wherein, in the dry electrode film, the first positive electrode active material is included in an amount of 50 to 95% by weight and the second positive electrode active material is included in an amount of 5 to 50% by weight, based on the total weight of the first positive electrode active material and the second positive electrode active material.

4. The method of any one of claims 1 to 3, wherein the first positive electrode active material and the second positive electrode active material are each a lithium iron phosphate-based compound, a lithium nickel-based oxide, a lithium cobalt-based oxide, a lithium manganese-based oxide, a cobalt-free lithium nickel-manganese-based oxide, or a combination thereof.

5. The method of any one of claims 1 to 4, wherein the first positive electrode active material and the second positive electrode active material are each a lithium iron phosphate-based compound.

6. The method of any one of claims 1 to 5, wherein, in the dry electrode film, the first binder is included in an amount of 20 to 50% by weight and the second binder is included in an amount of 50 to 80% by weight, based on the total weight of the first binder and the second binder.

7. The method of any one of claims 1 to 6, wherein a weight ratio of the first positive electrode active material to the first binder in the granules is 50: 1 to 90: 1; and/or wherein a weight ratio of the mixture of the granules and the second positive electrode active material to the second binder is 60:1 to 99:1.

8. The method of any one of claims 1 to 7, wherein the preparing of the granules includes kneading and pulverizing a mixture of the first positive electrode active material and the first binder.

9. The method of any one of claims 1 to 8, wherein the mixture of the granules, the second positive electrode active material, and the second binder are kneaded, pulverized, and calendered.

10. The method of any one of claims 1 to 9, wherein the granules and/or the mixture further include(s) a conductive material.

11. The method of any one of claims 1 to 10, wherein the granules include 60 to 90 parts by weight of the first positive electrode active material having a D50 average size of 3 µm or less, 0.5 to 3 parts by weight of the first conductive material, and 0.5 to 3 parts by weight of the first binder; and
wherein the dry electrode film includes the granules, 5 to 30 parts by weight of the second positive electrode active material having a D50 average size of 3 µm or less, 0.5 to 3 parts by weight of the second conductive material, and 0.5 to 3 parts by weight of the second binder.

12. The method of any one of claims 1 to 11, wherein the dry electrode film has an elongation rate of 1.45% or more and a tensile strength of 0.4 MPa or more.

13. A dry electrode for a rechargeable lithium battery, the dry electrode comprising:
a current collector and a dry electrode film disposed on the current collector,
wherein the dry electrode film includes granules including a first positive electrode active material and a first binder, a second positive electrode active material, and a second binder,
wherein the granules have a D90 size of 100 µm or less, and
wherein the second positive electrode active material has a D50 average size of 3 µm or less.

14. The dry electrode of claim 13, wherein the first positive electrode active material and the second positive electrode active material are each a lithium iron phosphate-based compound; and/or wherein the dry electrode film has an elongation rate of 1.45% or more and a tensile strength of 0.4 MPa or more.

15. A rechargeable lithium battery comprising the dry electrode manufactured by the manufacturing method of any one of claims 1 to 12.
